# EUROPEAN PATENT SPECIFICATION

(11) **EP 2 949 506 B1**
(45) Date of publication and mention of the grant of the patent: **19.06.2019**
(21) Application number: 14170390.0
(22) Date of filing: 28.05.2014
(51) Int. Cl.: B60P 1/04

(54) **Vehicle having automated control of a movable body**
Fahrzeug mit automatischer Steuerung eines beweglichen Körpers
Véhicule comprenant la commande automatisée d'un corps mobile

(43) Date of publication of application: 02.12.2015
(73) Proprietor: Caterpillar SARL, 1208 Geneva (CH)
(72) Inventor: Thompson, Stephen, Sunderland, Tyne and Wear SR3 2NT (GB); Balfour, David, Durham, DH1 2DR (GB)
(74) Representative: BRP Renaud & Partner mbB Rechtsanwälte Patentanwälte Steuerberater

(56) References cited:
- WO-A1-01/94151
- GB-A- 2 497 134
- US-A1- 2010 026 079

## Description

### TECHNICAL FIELD

The present disclosure relates generally to a vehicle having a body which can be moved relative to another vehicle member and a control system for automatically selecting an operational mode of the body.

### BACKGROUND

Load carrying vehicles, including trucks, wheel loaders and the like, are commonly employed during construction and excavation for transporting loads from one point to another. Load carrying vehicles may comprise a body often known as a dump body, for holding material which can be raised relative to the vehicle chassis and tipped about a pivot point to empty any material held therein. The body position may be controlled by one or more actuators, commonly hydraulic, which may move the body between a lowered loading and transport position and a raised tipping position.

A body control device, often known as a hoist control lever, may be conveniently located in the operator cab for actuating the raising or lowering of the body. Commonly known settings or positions for such body control devices relate to the following functions:-
- a "lower" function, in which the hydraulic lifting cylinders, or other actuators are actuated to move the body downwardly under power;
- a "float" function, in which the hydraulic lifting cylinders, or other actuators, are unpressurised and the body is permitted to move down under its own weight;
- a "hold" function, which maintains the body in its current position; and
- a "raise" function which actuates the hydraulic lifting cylinders, or other actuators to move the body upwardly under power.

The body control device positions for the float and hold functions are usually intermediate to the body control device positions for the lower and raise positions.

The float function may be used during transport with the body resting, for example against the vehicle chassis. The float function may also be used when lowering an empty or partially loaded body. Typically the float function may be selected when the body is close to the fully lowered position. If only the lower function is used, this may result in the body 'slamming' down under power onto the chassis, adversely loading the chassis. The operator may select the float function and then drive away from the dumping site, while the body lowers to the chassis under its own weight.

US 2010/0026079 A1 discloses a vehicle according to the preamble of claim 1.

### SUMMARY OF THE DISCLOSURE

The present disclosure therefore provides a vehicle comprising:
a body movable between at least two position;
a hoist system comprising at least one actuator connected to the body, said hoist system having a plurality of operational modes comprising at least:
   a first mode in which the at least one actuator lowers the body between the at least two positions; and
a second mode in which the body moves under its own weight;
an operator controlled body control device for selecting the first mode of the hoist system;
a control system; and
at least one inertia measurement unit configured as an inclination sensor to provide at least one position signal to the control system relating to a body position of the body;
wherein said control system is configured to automatically engage the second mode of the hoist system if it determines from the at least one position signal that the body position is at a first predetermined body position and the first mode is engaged.

### BRIEF DESCRIPTION OF THE DRAWINGS

Preferred embodiments of the vehicle and control system of the present disclosure will now be described, by way of example only, with reference to the accompanying drawings in which:
Figure 1 is a side elevation of an articulated load carrying vehicle; and
Figure 2 is a pictorial view of a combined transmission gear select lever and body control device.

### DETAILED DESCRIPTION

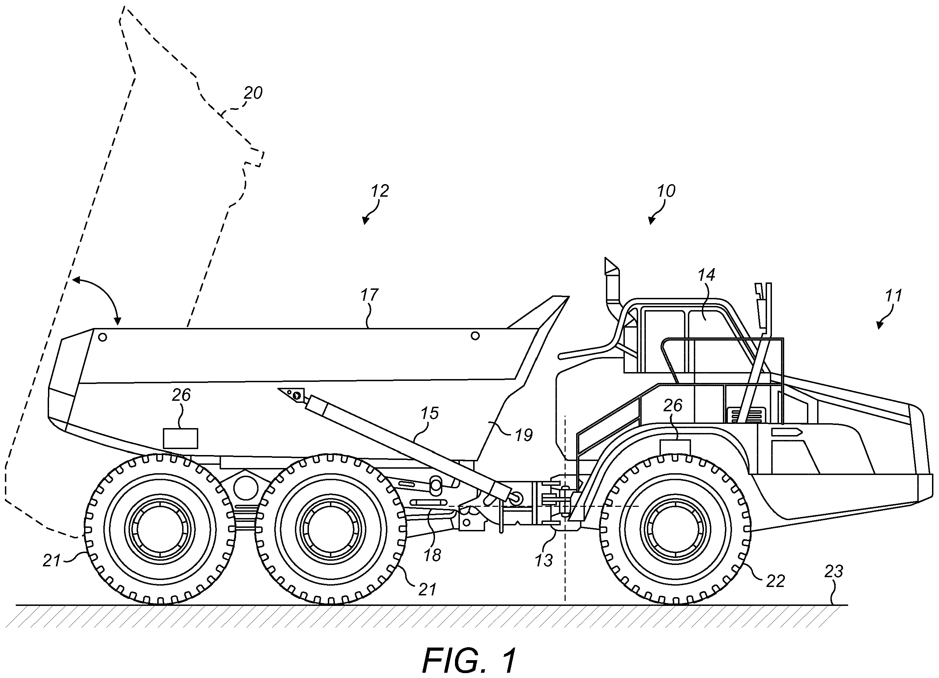

The vehicle of the present disclosure may be any type of vehicle, in particular a load carrying vehicle, which has a body that may be moved relative to another vehicle member between first and second positions. In this example the body is raised and lowered relative to a chassis. Such vehicles include articulated or non-articulated vehicles. One exemplary vehicle 10 is illustrated in Figure 1 in the form of an articulated tipper truck.

The vehicle 10 may comprise a first frame 11, in this example a tractor unit, attached to a second frame 12, in this example a trailer unit. The frames 11, 12 may be attached together by a coupling 13. The first frame 11 may comprise an operator cab 14 which houses the operator controls for the vehicle 10. The coupling 13, which may be an articulation joint, may allow each of the first and second frames 11, 12 to be orientated at a different yaw and/or roll angle to the other frame 12, 11.

The second frame 12 may comprise a body 17, such as a dump body, adapted to carry a load. The body 17 may be pivotally attached to a chassis 18 of the second frame 12 at a pivot point. The second frame 12 may further comprise a hoist system 15 which, when activated, may raise the body 17 from a first body position 19, which in this example is a "body down" position resting on the chassis 18, causing it to rotate about the pivot into a second body position 20, which in this example is a "body up" tipping position at an angle to the chassis 18. As the body 17 rotates into the second body position 20, the body 17 may eject some or all of the materials or load from the body 17. The hoist system 15 may also be activated to carry out the reverse operation, in which the body 17 is lowered from the second body position 20 back to the first body position 19. The body 17 may be any type of container and may be open at the top, fully enclosed or partially enclosed.

In yet another type of vehicle, the body 17 may comprise the operator cab 14 or another vehicle member which is raised and lowered or otherwise moved relative to the chassis 18, or a different vehicle member.

The hoist system 15 may comprise at least one actuator connected between the body 17 and the chassis 18. One actuator may be provided on each side of the vehicle 10. Alternatively, one or more actuators may be provided underneath the body 17 or in another configuration. The hoist system 15 may further comprise a pump, driven by the vehicle's power unit (for example an engine), for supplying pressurised working fluid to the actuators. The actuators may be cylinder actuators which provide a fixed length of straight-line motion. Such actuators may comprise a tight-fitting piston movable within a closed cylinder. The piston may be attached to a rod that extends from one end of the cylinder to provide the mechanical output. The cylinder may have a port at each end to admit or return fluid.

The hoist system 15 may be a hydraulic system, comprising at least one hydraulic actuator. Alternatively, the hoist system 15 may be a pneumatic or electrical system, comprising pneumatic or electrical actuators.

At least one valve, such as a hoist valve, may be used in conjunction with the actuator(s) to control the supply of pressurised fluid to/from the actuator(s). The hoist valve may be a four-way directional valve. Where the actuators are cylinder actuators, the hoist valve may connect the cylinder ports to the working fluid supply or the return to a fluid tank, depending on the desired direction, if any, of the power stroke. The hoist valve may have a first (Extend) valve position, which causes the actuator to extend. For a cylinder actuator, a first cylinder port may be connected to the fluid supply and the second cylinder port may be connected to the return to the fluid tank. The hoist valve may have a second (Retract) valve position, which causes the actuator to retract. For a cylinder actuator, the second cylinder port may be connected to the fluid supply and the first cylinder port may be connected to the return to the fluid tank. The hoist valve may have a third (Float) valve position, in which the actuator is unpressurised or under a low pressure. For a cylinder actuator both cylinder ports may be connected to atmospheric pressure, or a source of low pressure, for example to the fluid tank. The hoist valve may have a fourth (Hold) valve position in which the actuator remains pressurised. For a cylinder actuator the actuator may remain pressurised but any flow of the working fluid is prevented.

The vehicle 10 may comprise one or more terrain engaging means 21,22 in contact with the terrain 23. The terrain 23 may be the ground or any surface on which the vehicle 10 is operated. The terrain engaging means 21,22 may be, for example, tracks and/or wheels which are driven by the vehicle's power unit to enable the vehicle 10 to move along the terrain 23 and the vehicle 10 may comprise any number of terrain engaging means 22. As illustrated in Figure 1, the first frame 11 may have one pair of first frame ground engaging means 22 and the second frame 12 may have two pairs second frame ground engaging means 21, with one of each pair of ground engaging means 21,22 located on either side of the vehicle 10.

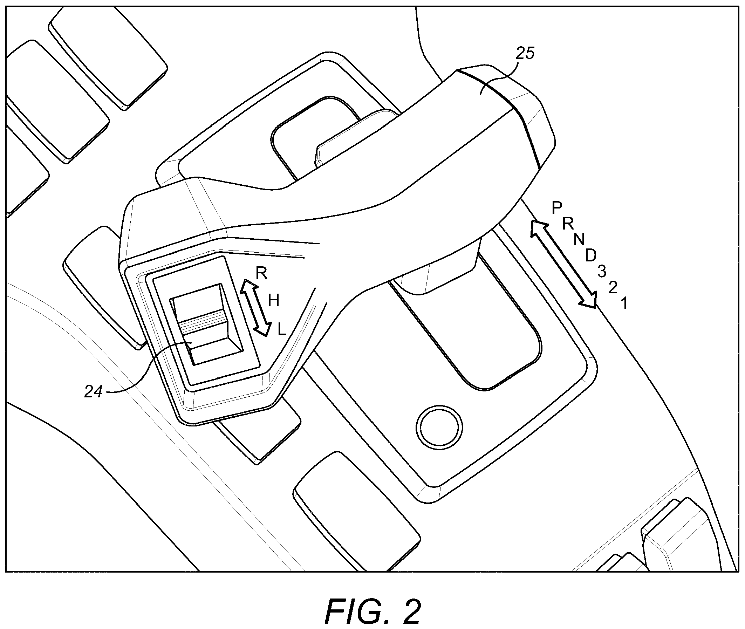

The operator controls may include one or more brake actuators (such as pedals), a transmission gear select lever 25, one or more body control device 24 (often known as hoist levers) and a steering device. In one embodiment, a single body control device 24 may be mounted on or combined with the transmission gear select lever 25. The body control device 24 may comprise a switch on the transmission gear select lever 25, as shown in Figure 2. The switch may comprise a multi-position rocker switch, which has positions for Lower (L), Raise (R) and Hold (H). The Hold position may be ommitted, although in such a case the hoist valve may still have a hold function as described above. Alternatively, the body control device 24 may comprise a separate lever mounted for pivoting between the various positions.

The vehicle 10 may comprise one or more electronic control units (ECUs) which are configured to monitor operating parameters and to control operation of various of the vehicle's systems and components. These ECUs will be collectively referred to herein as a control unit.

The body control device 24 may be operably connected to provide a hoist signal to the control unit. Each position of the body control device 24 may provide a different hoist demand signal to the control unit. The hoist valve(s) and pump may be operably connected to the control unit and controlled thereby.

The vehicle 10 may further comprise at least one position sensor 26 mounted on the body 17, which is configured to determine the angle/position of the body 17 relative to the chassis 18 and to provide a position signal relating thereto to the control unit. One position sensor 26 may be mounted on the body 17 and a second position sensor 26 may be mounted on another part of the vehicle 10, for example the chassis 18 to which the body 17 is mounted. If the vehicle 10 is an articulated vehicle, a second position sensor 26 may be mounted on the first frame 11 (tractor unit).

The position sensor may comprise an inertia measurement unit (IMU), which is configured to act as an inclination sensor. The position sensor may be of any type of IMU, for example, piezoelectric, capacitive, potentiometric, Hall effect, magnetoresistive, piezo-resistive or any type of micro-electromechanical system (MEMS). These sensors generally comprise a "proof" mass. This mass moves relative to the frame of the sensor. That difference in movement between the frame and proof mass is related to its acceleration and can be measured in a variety of ways: capacitively, piezo-electrically, and piezo-resistively. A solid object's movement can be fully described by measuring linear acceleration in the x, y, and z directions and angular velocity about the x, y, and z axes

The control unit may determine the angular position of the body 17 relative to the other part of the vehicle, such as the chassis 18 or first frame 11, based on the position signal(s) received from the position sensor(s). Where two position sensors are used, the control unit may compare the position signals received from the two sensors. If the position signals are the same, then the body 17 is in the lowered position. If they are not the same, the control unit may use an algorithm to calculate the relative angular difference between the body 17 and the chassis 18/first frame 11. This relative difference is the "body up" angle. For an articulated vehicle it should be noted that the first and second frames 11,12 may themselves be at different angles and the algorithm may take account of this. GB-A-2497134 describes how IMUs may be used to calculate the relative angular position of the body in an articulated vehicle, taking account of a number of different scenarios. The contents of this document are incorporated herein by reference.

### INDUSTRIAL APPLICABILITY

The vehicle of the present disclosure may be any of a wide range of vehicles, not just those described herein, which have a body 17 which may be raised or lowered or otherwise moved relative to a chassis 18 or other vehicle member. In particular the vehicle 10 may be a tipper truck with a hydraulically controlled pivotable dump body.

When the operator wishes to raise the body 17, or move it from a first body position 19 to a second body position 20 (which may be a a first mode of operation), he may select the Raise (R) position of the body control device 24. This may provide a first hoist demand signal to the control unit. On receipt of this signal, the control unit may switch the valve(s) of the hoist system to the first valve position. The control unit may also adjust the speed of the vehicle power unit, to run at an appropriate operating speed for driving the pump. This may cause the actuator(s) of the hoist system 15 to extend, thereby raising the body 17, or moving it from the first body position 19 towards the second body position 20. In the case of a tipper system, the act of raising the body 17 may also cause it to pivot, thereby emptying some or all of the materials therein.

When the operator wishes to lower the body 17 from a raised position(which may be a third mode of operation), for example after it has been emptied or partially emptied, or move it to the first body position 19, he may select the Lower (L) position of the body control device 24. This may provide a second hoist demand signal to the control unit. On receipt of this signal, the control unit may switch the valve(s) of the hoist system to the second valve position. The control unit may also adjust the speed of the vehicle power unit, to run at an appropriate operating speed for driving the pump, and this may cause the hydraulic actuator(s) to retract and lower or move the body 17 towards the first body position.

When the lower function is being used, there is a risk that the body 17, especially if it is still partially loaded, may crash into the chassis 18, or the other vehicle member. To avoid this, the operator has hitherto had to manually engage a float function, by means of the body control device 24, before the body 17 reaches the end of its travel. In the vehicle 10 of the present disclosure, the control system may automatically engage the float function (a second mode of operation) under certain conditions. This may occur if the control system determines, from position signals generated by the position sensor(s), that the body 17 is at a predetermined position and that the lower function is engaged. The control system may determine which function is in operation by determining the position of the body control device 24 from the hoist demand signal generated by the body control device 24.

If the conditions are met, the control unit may switch the hoist valve(s) from the second (Retract) valve position to the third (Float) valve position to divert the flow of working fluid from the pump to the fluid tank or reduce it to zero. This may cause the actuator(s) to depressurise and allow the body 17 to move under its own weight. If the pump is electrically driven, the pump may be switched off.

The predetermined position may be when the body 17 is at an angle of less than 5°, for example 2°, to the chassis 18. The float function may be automatically disengaged by the control unit if it determines that the body 17 is no longer in the predetermined position.

The automatically engaged float function may remain active until the operator next selects the raise function. This means that the body 17 may move (i.e., the hydraulic or other actuators may slightly extend/retract) in response to any deflection of the chassis 18 under load whilst the vehicle 10 is travelling.

When the float function is engaged, the operator may at any time override this and select the hold function (if available) by moving the body actuator 24 to the appropriate position.

Alternatively, the float function may be automatically disengaged by the control unit when other vehicle system checks indicate that it is unsafe for the float function to remain active.

The vehicle 10 may also be provided with a "soft stop" function which is automatically activated when the body 17 is being raised and nears the body up position. Hitherto the operator has had to manually slow the speed of ascent and engage the hold function, by means of the body control device 24, when the body reaches the body up position. In the vehicle 10 of the present disclosure, the control system may automatically slow down the speed of movement of the body 17 as a second predetermined body position is reached and, when the body up position (a third predetermined body position) is reached, engage the hold function (a fourth mode of operation). This may occur if the control system determines, from position signals generated by the position sensor(s), that the body 17 is at the second predetermined position and that the raise function is engaged. The control system may determine which function is in operation by determining the position of the body control device 24 from the hoist demand signal generated by the body control device 24.

If the conditions are met, the control unit may reduce the flow of working fluid to the actuator(s) when the second predetermined body position is reached, which slows down the speed of movement of the body 17. When the body 17 reaches the third predetermined body position, the control unit may switch the valve(s) of the hoist system from the first (Extend) valve position to the fourth (Hold) valve position. This may cause the position of the body 17 to lock at this third predetermined position. The second predetermined body position may when the body 17 is at an angle of greater than 60° to the chassis 18 or other vehicle part. The third predetermined body position may when the body 17 is at an angle of 70° to the chassis 18 or other vehicle part.

If the vehicle 10 has a Hold position for the body control device 24, when the operator wishes to engage the hold function, he may move the body control device 24 to the Hold position. This may provide a hold demand signal to the control unit. On receipt of this signal the control unit may switch the valve(s) of the hoist system to the fourth (Hold) position. The control unit may also adjust the speed of the vehicle's power unit to run at an appropriate operating speed for driving the pump. This may cause the position of the body 17 to lock.

## Claims

1. A vehicle comprising:
a body movable between at least two positions;
a hoist system comprising at least one actuator connected to the body, said hoist system having a plurality of operational modes comprising at least:
a first mode in which the at least one actuator lowers the body between the at least two positions; and
a second mode in which the body moves under its own weight;
an operator controlled body control device for selecting the first mode of the hoist system;
a control system; **characterised in that** the vehicle comprises
at least one inertia measurement unit configured as an inclination sensor to provide at least one position signal to the control system relating to a body position of the body;
wherein said control system is configured to automatically engage the second mode of the hoist system if it determines from the at least one position signal that the body position is at a first predetermined body position and the first mode is engaged.

2. A vehicle as claimed in claim 1, wherein in the first mode the body is lowered from a raised position, which is at an angle relative to another part of the vehicle, to a lowered position in which there is no angular difference between the body and said other part of the vehicle.

3. A vehicle as claimed in claim 1 or claim 2 in which the at least one inertia measurement unit is mounted on the body.

4. A vehicle as claimed in claim 3 in which a further inertia measurement unit is mounted on another part of the vehicle.

5. A vehicle as claimed in claim 4 in which the control system determines the body position by comparing the at least one position signal received from each inertia measurement unit.

6. A vehicle as claimed in claim 5 in which the control system calculates the relative angular difference between the body and said other part of the vehicle.

7. A vehicle as claimed in any one of the preceding claims in which the first predetermined body position is when the body is at an angle of less than 5° to said other part of the vehicle.

8. A vehicle as claimed in any one of the preceding claims, wherein when the second mode is engaged, the control system automatically disengages the second mode if it determines that the body position is no longer at said first predetermined body position.

9. A vehicle as claimed in any one of the preceding claims, wherein the said hoist system has a third mode or operation in which the at least one actuator raises the body between at least two positions and a fourth mode in which the position of the body is locked, wherein the control system is configured to automatically engage the fourth mode if it determines from the at least one position signal that the body position is at a third predetermined body position and the third mode is engaged.

10. A vehicle as claimed in claim 9, wherein in the third mode the body is raised from a lowered position relative to said other part of the vehicle to a raised position at an angle to said other part of the vehicle.

11. A vehicle as claimed in claim 9 or claim 10 in which the third predetermined body position is when the body is at an angle of 70°to said other part of the vehicle.

12. A vehicle as claimed in any one of claims 9 to 11, wherein the control system is configured to automatically slow down the speed of movement of the body if it determines that the body position is at a second predetermined body position.

13. A vehicle as claimed in claim 12 in which the second predetermined body position is when the body is at an angle greater than 65° to said other part of the vehicle.

14. A vehicle as claimed in any one of the preceding claims, wherein when the second mode is engaged, the control system automatically disengages the second mode if the first or fourth mode is manually engaged by an operator.

15. A vehicle as claimed in any one of the preceding claims in which the hoist system further comprises at least one valve controlling operation of the at least one actuator.

16. A vehicle as claimed in claim 15 in which the at least one valve has a plurality of positions which determine the operational mode of the hoist system.

## Patentansprüche

1. Fahrzeug, umfassend:
einen zwischen mindestens zwei Positionen bewegbaren Körper;
ein Zugsystem, das mindestens einen mit dem Körper verbundenen Aktuator umfasst, wobei das Zugsystem eine Mehrzahl von Betriebsmodi aufweist, umfassend mindestens:
einen ersten Modus, in dem der mindestens eine Aktuator den Körper zwischen den mindestens zwei Positionen absenkt; und
einen zweiten Modus, in dem der Körper sich unter seinem eigenen Gewicht bewegt;
eine bedienergesteuerte Körpersteuervorrichtung zum Auswählen des ersten Modus des Zugsystems;
ein Steuerungssystem; **dadurch gekennzeichnet, dass** das Fahrzeug
mindestens eine Trägheitsmesseinheit umfasst, die als ein Neigungssensor eingerichtet ist, um mindestens ein Positionssignal für das Steuerungssystem bereitzustellen, das sich auf eine Körperposition des Körpers bezieht;
wobei das Steuerungssystem eingerichtet ist, um automatisch den zweiten Modus des Zugsystems einzulegen, wenn es aus dem mindestens einen Positionssignal bestimmt, dass die Körperposition sich an einer ersten vorbestimmten Körperposition befindet und der erste Modus eingelegt ist.

2. Fahrzeug nach Anspruch 1, wobei der Körper in dem ersten Modus von einer erhöhten Position, die sich relativ zu einem anderen Teil des Fahrzeugs in einem Winkel befindet, zu einer abgesenkten Position, in welcher es keine Winkeldifferenz zwischen dem Körper und dem anderen Teil des Fahrzeugs gibt, abgesenkt wird.

3. Fahrzeug nach Anspruch 1 oder Anspruch 2, wobei die mindestens eine Trägheitsmesseinheit an dem Körper montiert ist.

4. Fahrzeug nach Anspruch 3, wobei eine weitere Trägheitsmesseinheit an einem anderen Teil des Fahrzeugs montiert ist.

5. Fahrzeug nach Anspruch 4, wobei das Steuerungssystem die Körperposition bestimmt, indem es das von der Trägheitsmesseinheit empfangene mindestens eine Positionssignal vergleicht.

6. Fahrzeug nach Anspruch 5, wobei das Steuerungssystem die relative Winkeldifferenz zwischen dem Körper und dem anderen Teil des Fahrzeugs berechnet.

7. Fahrzeug nach einem der vorstehenden Ansprüche, wobei die erste vorbestimmte Körperposition vorliegt, wenn der Körper sich in einem Winkel von weniger als 5° zu dem anderen Teil des Fahrzeugs befindet.

8. Fahrzeug nach einem der vorstehenden Ansprüche, wobei das Steuerungssystem, wenn der zweite Modus eingelegt ist, automatisch den zweiten Modus ausschaltet, wenn es bestimmt, dass die Körperposition sich nicht länger an der ersten vorbestimmten Körperposition befindet.

9. Fahrzeug nach einem der vorstehenden Ansprüche, wobei das Zugsystem einen dritten Modus oder Betrieb, in dem der mindestens eine Aktuator den Körper zwischen mindestens zwei Positionen anhebt, und einen vierten Modus, in dem die Position des Körpers verriegelt ist, aufweist, wobei das Steuerungssystem eingerichtet ist, um automatisch den vierten Modus einzulegen, wenn es aus dem mindestens einem Positionssignal bestimmt, dass die Körperposition sich an einer dritten vorbestimmten Körperposition befindet und der dritte Modus eingelegt ist.

10. Fahrzeug nach Anspruch 9, wobei der Körper in dem dritten Modus von einer abgesenkten Position relativ zu dem anderen Teil des Fahrzeugs zu einer erhöhten Position in einem Winkel zu dem anderen Teil des Fahrzeugs angehoben wird.

11. Fahrzeug nach Anspruch 9 oder Anspruch 10, wobei die dritte vorbestimmte Körperposition vorliegt, wenn der Körper sich in einem Winkel von 70° zu dem anderen Teil des Fahrzeugs befindet.

12. Fahrzeug nach einem der Ansprüche 9 bis 11, wobei das Steuerungssystem eingerichtet ist, um die Bewegungsgeschwindigkeit des Körpers automatisch zu verlangsamen, wenn sie bestimmt, dass die Körperposition sich an einer zweiten vorbestimmten Körperposition befindet.

13. Fahrzeug nach Anspruch 12, wobei die zweite vorbestimmte Körperposition vorliegt, wenn der Körper sich in einem Winkel von mehr als 65° zu dem anderen Teil des Fahrzeugs befindet.

14. Fahrzeug nach einem der vorstehenden Ansprüche, wobei das Steuerungssystem, wenn der zweite Modus eingelegt ist, automatisch den zweiten Modus ausschaltet, wenn der erste oder vierte Modus manuell von einem Bediener eingelegt wird.

15. Fahrzeug nach einem der vorstehenden Ansprüche, wobei das Zugsystem weiter mindestens einen Ventil umfasst, das den Betrieb des mindestens einen Aktuators steuert.

16. Fahrzeug nach Anspruch 15, wobei das mindestens eine Ventil eine Mehrzahl von Positionen aufweist, die den Betriebsmodus des Zugsystems bestimmen.

## Revendications

1. Véhicule comprenant :
un corps mobile entre au moins deux positions ;
un système de levage comprenant au moins un actionneur raccordé au corps, ledit système de levage présentant une pluralité de modes opérationnels comprenant au moins :
un premier mode dans lequel l'au moins un actionneur abaisse le corps entre les au moins deux positions ; et
un deuxième mode dans lequel le corps se déplace sous son propre poids ;
un dispositif de commande de corps commandé par opérateur pour la sélection du premier mode du système de levage ;
un système de commande ; **caractérisé en ce que** le véhicule comprend
au moins une unité de mesure d'inertie configurée en tant que capteur d'inclinaison pour fournir au moins un signal de position au système de commande concernant une position du corps ;
dans lequel ledit système de commande est configuré pour enclencher automatiquement le deuxième mode du système de levage s'il détermine à partir de l'au moins un signal de position que la position de corps est sur une première position de corps prédéterminée et le premier mode est enclenché.

2. Véhicule selon la revendication 1, dans lequel dans le premier mode le corps est abaissé d'une position relevée, qui est selon un angle par rapport à une autre partie du véhicule, à une position abaissée dans laquelle il n'y a pas de différence angulaire entre le corps et ladite autre partie du véhicule.

3. Véhicule selon la revendication 1 ou la revendication 2, dans lequel l'au moins une unité de mesure d'inertie est montée sur le corps.

4. Véhicule selon la revendication 3, dans lequel une autre unité de mesure d'inertie est montée sur une autre partie du véhicule.

5. Véhicule selon la revendication 4, dans lequel le système de commande détermine la position de corps en comparant l'au moins un signal de position reçu à partir de chaque unité de mesure d'inertie.

6. Véhicule selon la revendication 5, dans lequel le système de commande calcule la différence angulaire relative entre le corps et ladite autre partie du véhicule.

7. Véhicule selon l'une quelconque des revendications précédentes, dans lequel la première position de corps prédéterminée est lorsque le corps est selon un angle inférieur à 5° par rapport à ladite autre partie du véhicule.

8. Véhicule selon l'une quelconque des revendications précédentes, dans lequel lorsque le deuxième mode est enclenché, le système de commande désenclenche automatiquement le deuxième mode s'il détermine que la position de corps n'est plus sur ladite première position de corps prédéterminée.

9. Véhicule selon l'une quelconque des revendications précédentes, dans lequel ledit système de levage présente un troisième mode ou opération dans laquelle l'au moins un actionneur lève le corps entre au moins deux positions et un quatrième mode dans lequel la position du corps est verrouillée, dans lequel le système de commande est configuré pour enclencher automatiquement le quatrième mode s'il détermine à partir de l'au moins un signal de position que la position de corps est sur une troisième position de corps prédéterminée et le troisième mode est enclenché.

10. Véhicule selon la revendication 9, dans lequel dans le troisième mode le corps est levé d'une position abaissée par rapport à ladite autre partie du véhicule à une position relevée selon un angle par rapport à ladite autre partie du véhicule.

11. Véhicule selon la revendication 9 ou la revendication 10, dans lequel la troisième position de corps prédéterminée est lorsque le corps est selon un angle de 70° par rapport à ladite autre partie du véhicule.

12. Véhicule selon l'une quelconque des revendications 9 à 11, dans lequel le système de commande est configuré pour ralentir automatiquement la vitesse de déplacement du corps s'il détermine que la position de corps est sur une deuxième position de corps prédéterminée.

13. Véhicule selon la revendication 12, dans lequel la deuxième position de corps prédéterminée est lorsque le corps est selon un angle supérieur à 65° par rapport à ladite autre partie du véhicule.

14. Véhicule selon l'une quelconque des revendications précédentes, dans lequel lorsque le deuxième mode est enclenché, le système de commande désenclenche automatiquement le deuxième mode si le premier ou quatrième mode est manuellement enclenché par un opérateur.

15. Véhicule selon l'une quelconque des revendications précédentes, dans lequel le système de levage comprend en outre au moins une opération de commande de valve de l'au moins un actionneur.

16. Véhicule selon la revendication 15, dans lequel l'au moins une valve présente une pluralité de positions qui déterminent le mode opérationnel du système de levage.
